# EUROPÄISCHE PATENTSCHRIFT

(11) **EP 2 641 684 B1**
(45) Veröffentlichungstag und Bekanntmachung des Hinweises auf die Patenterteilung: **19.04.2017**
(21) Anmeldenummer: 13150540.6
(22) Anmeldetag: 08.01.2013
(51) Int. Cl.: B23D 45/00, B28D 1/00

(54) **Handarbeitsgerät**
Manual operating device
Appareil de travail manuel

(30) Priorität: 19.03.2012 DE 202012002727 U
(43) Veröffentlichungstag der Anmeldung: 25.09.2013
(73) Patentinhaber: Berhalter, Eberhard, 88069 Tettnang (DE)
(72) Erfinder: Berhalter, Eberhard, 88069 Tettnang (DE)
(74) Vertreter: Daub, Thomas

(56) Entgegenhaltungen:
- DE-C- 498 645
- DE-U1-202008 013 556
- GB-A- 2 309 411
- US-A- 6 112 736

## Beschreibung

Die Erfindung bezieht sich auf ein gemäß dem Oberbegriff des Anspruchs 1 beschriebenes Handarbeitsgerät zum Durchtrennen eines Metallklipses in einem Mauerwerk, mit einer Säge- oder Frässcheibe, die über einen Antriebsflansch mit einem Antriebsmotor des Handarbeitsgerätes trieblich verbunden ist, mit einem an dem Handarbeitsgerät befestigten Gehäuse , in dem die Säge- oder Frässcheibe angeordnet ist, in dessen dem Metallklips zugewandten Stirnseite eine Austrittsöffnung für den Austritt der Säge- oder Frässcheibe vorgesehen ist, durch die die Säge- oder Frässcheibe , zumindest teilweise, aus dem Gehäuse ragt, wobei die Unterseite des Gehäuses ganz oder teilweise plan ausgestaltet ist, wobei an der Unterseite des Gehäuses mindestens eine Distanzplatte mit einer vorgegebenen Wandstärke befestigbar ist, wobei durch die Distanzplatte der Abstand zwischen der Säge- oder Frässcheibe und dem Mauerwerk einstellbar ist.

Aus der DE-GM 2 990 944.9 ein solches Handarbeitsgerät bekannt geworden, das zum Heraustrennen von in Mauerwerken eingesetzten Fensterrahmen zu Renovierungszwecken verwendet werden kann. Die Fensterrahmen sind dabei mit Hilfe von einer Vielzahl von Metallklipsen mit dem Mauerwerk verbunden. Die Metallklipse sind verputzt, so dass die Säge- oder Frässcheibe des Handarbeitsgerätes sowohl das Mauerwerk als auch den Putz und den jeweiligen Metallklips zu durchtrennen hat. Sobald sämtliche Metallklipse zerschnitten sind, kann der Fensterrahmen ausgebaut werden.

Weiterhin ist aus GB 2 309 411 A eine gemäß dem Oberbegriff des Anspruchs 1 beschriebene Vorrichtung zum Herstellen von Nuten bekannt, die an einem Handarbeitsgerät befestigt werden kann. Die Vorrichtung umfasst ein Gehäuse, in dem eine Säge- oder Frässcheibe angeordnet ist, welche durch eine schlitzförmige Öffnung in einer einem Werkstück zugewandten Stirnseite der Vorrichtung beweglich geführt ist. Durch einen Einstellbolzen ist eine Begrenzung des Verfahrweges der Säge- oder Frässcheibe möglich, und dadurch eine Einstellung eines Abstandes der Säge- oder Frässcheibe von dem Werkstück.

Da oftmals erhebliche Abstandsunterschiede zwischen dem Mauerwerk und dem Fensterrahmen zu überbrücken sind, werden unterschiedlich lang ausgestaltete Metallklipse beim Einbau der Fensterrahmen verwendet. Die Unterseite des Gehäuses des Handarbeitsgerätes dient als Auflagefläche auf dem Fensterrahmen zur Führung des Handarbeitsgerätes entlang der Stirnseite des Mauerwerkes. Wenn jedoch Abstandsunterschiede zwischen eingebauten und neu einzusetzenden Fensterrahmen vorliegen, ist ein Ausgleich vorzunehmen, um eine korrekte Montage des neuen Fensterrahmens im Mauerwerk zu ermöglichen.

Der Benutzer des Handarbeitsgerätes hat folglich eine Vielzahl von unterschiedlich bemessenen Unterlagsscheiben, -Platten oder Leisten mitzuführen, die an der jeweiligen Bearbeitungsstelle an dem Fensterrahmen aufzusetzen sind, um das Handarbeitsgerät in richtigem Abstand zu führen.

Eine solche Anwendung hat sich als äußerst zeitaufwändig und unprofessionell erwiesen, denn oftmals hat ein Benutzer nicht die notwendigen Unterlagsplatten dabei und/oder diese rutschen vom Fensterrahmen ab, so dass das Handarbeitsgerät nicht ordnungsgemäß geführt werden kann. Zudem benötigt der Benutzer beide Hände, um das Handarbeitsgerät zu halten, so dass die Unterlagsscheiben nicht oder von einer weiteren Person fixiert sind.

Auch die stufenlose Verstellung der Unterseite des Gehäuses mittels Stellschrauben hat sich lediglich bedingt bewährt, denn die Einstellung der Stellschrauben ist exakt aufeinander abzustimmen und gegen einen bestimmten Drehwiderstand durchzuführen. Da oftmals in den Eckbereichen des Gehäuses diese Stellschrauben angeordnet sind, sind mehrere Stellschrauben zu verändern, um das Gehäuse an die unterschiedlichen vorliegenden Abstände anzupassen. Diese Einstellungsmöglichkeit hat sich daher als äußerst zeitaufwändig erwiesen.

Es ist daher Aufgabe der Erfindung, ein Handarbeitsgerät der eingangs genannten Gattung bereit zu stellen, mittels dem das Heraustrennen von Fensterrahmen möglich ist, bei denen unterschiedliche geometrische Abstände zwischen der Auflagefläche des Handarbeitsgerätes und der Schnittfuge vorliegen, und solche Abstände auf schnelle und einfache Weise an dem Handarbeitsgerät variabel ausgleichbar sind.

Diese Aufgabe ist erfindungsgemäß durch die Merkmale des Anspruchs 1 gelöst, dass an dem Gehäuse mindestens eine zapfen- oder stegförmige Aufnahmelasche vorgesehen ist, in die eine in die Distanzplatte eingearbeitete Aufnahmekammer nach Art einer Hinterschneidung verrastbar ist und/oder dass an der Distanzplatte mindestens ein biegeelastischer Zapfen angeformt ist, der in eine in das Gehäuse des Handarbeitsgerätes eingeformte Aufnahmekammer nach Art einer Hinterschneidung verrastbar oder verklipsbar gehalten ist.

Weitere vorteilhafte Weiterbildungen der Erfindung ergeben sich aus den Unteransprüchen.

Dadurch, dass an dem Gehäuse, in dem die Säge-oder Frässcheibe angeordnet ist, außenseitig eine oder mehrere Distanzplatten, die unterschiedlich groß bemessene

Wandstärken aufweisen, angebracht werden können, ist der Abstand zwischen dem Fensterrahmen und der Schnittfuge variabel ausgleichbar, so dass das Handarbeitsgerät vorteilhafterweise an der Stirnseite des Mauerwerks exakt positioniert ist und geführt gehalten aufliegt. Zudem ist besonders vorteilhaft, dass die Distanzplatten schnell und einfach an das Gehäuse bzw. stapelbar aneinander angebracht werden können.

Darüberhinaus kann der Benutzer des Handarbeitsgerätes anhand unterschiedlicher Farben von Distanzplatten erkennen, welche Wandstärke die jeweilige Distanzplatte aufweist, um einen optimalen Ausgleich vornehmen zu können.

Da die Distanzplatte fest an der Unterseite des Gehäuses aufgebracht sind, die ganz oder teilweise plan ausgestaltet ist, um eine möglichst groß bemessene Auflagefläche bereitzustellen, verschieben sich die Distanzplatten nicht relativ gegenüber dem Gehäuse und auch nicht untereinander, so dass die Führung des Handarbeitsgerätes entlang des Mauerwerkes bewerkstelligt ist.

In der Zeichnung ist ein erfindungsgemäßes Ausführungsbeispiel eines Handarbeitsgerätes dargestellt, das nachfolgend näher erläutert ist. Im Einzelnen zeigt:
- Figur 1: ein Handarbeitsgerät mit einem Griffstück mit einem an diesem befestigten Antriebsmotor, der über einem Antriebsflansch trieblich mit einer Säge- oder Frässcheibe verbunden ist, mit einem Gehäuse, in dem die Säge- oder Frässcheibe angeordnet ist und mit einer an die Unterseite des Gehäuses einklipsbaren Distanzplatte, in perspektivischer Ansicht und
- Figur 2: das Handarbeitsgerät gemäß Figur 1 mit zwei an der Unterseite des Gehäuses angebrachten Distanzplatten, im Schnitt.

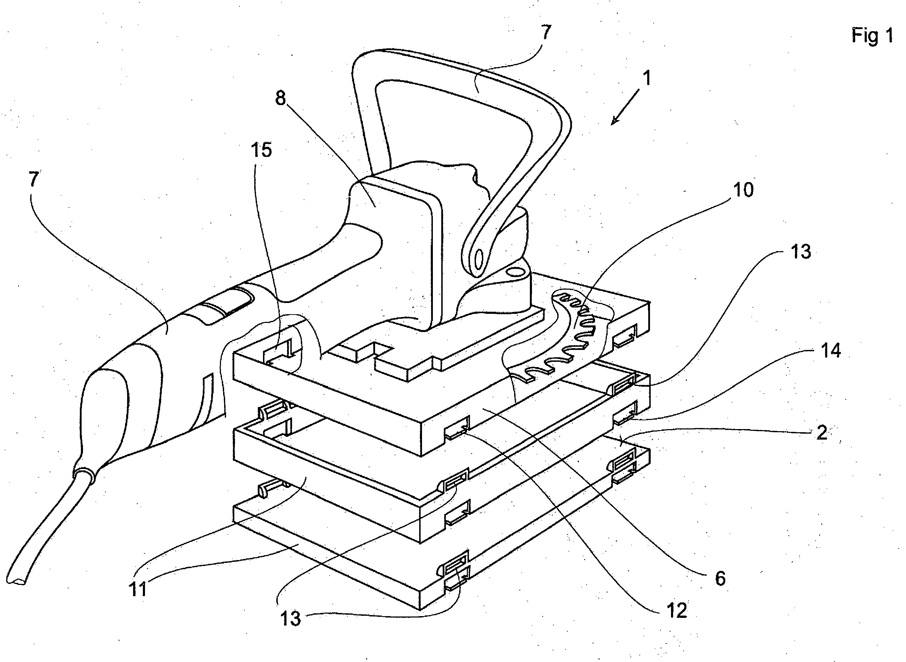

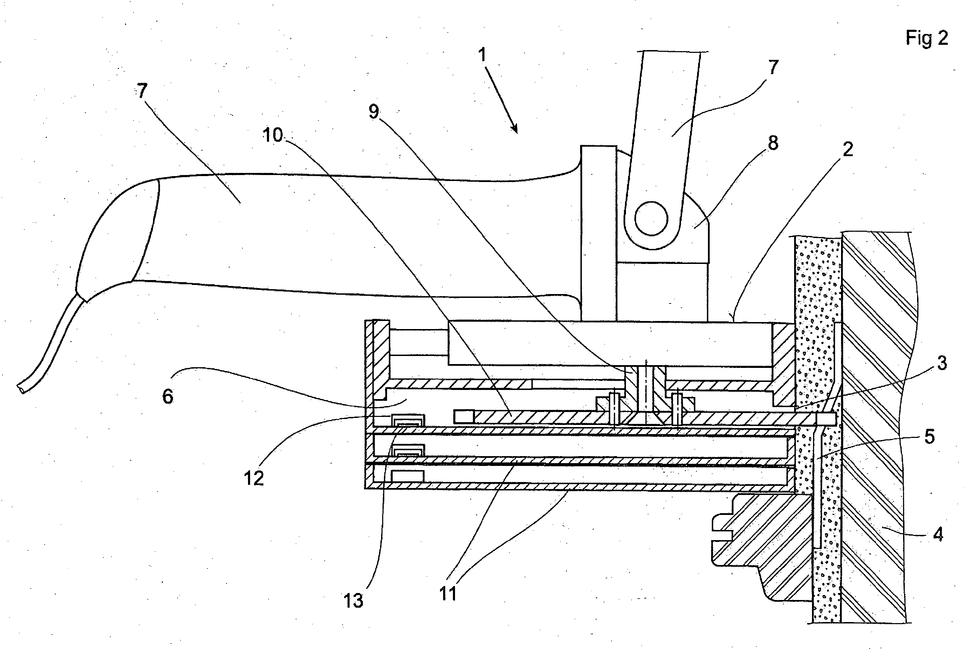

Aus Figur 1 ist ein Handarbeitsgerät 1 zu entnehmen, durch das eine Säge- oder Frässcheibe 10, die in einem Gehäuse 2 angeordnet ist, anzutreiben ist. Aus Figur 2 ist ersichtlich, dass mit Hilfe des Handarbeitsgerätes 1 ein in einem Mauerwerk 4 eingeputzter Metallklips 5, durch den ein Fensterrahmen in der Mauerwerköffnung gehalten ist, durchtrennt werden soll. Zu diesem Zweck wird die Säge- oder Frässcheibe 10 aus einer in dem Gehäuse 2 eingearbeiteten Austrittsöffnung 3 in Richtung des Metallklipses 5 verschoben.

Zudem besteht das Handarbeitsgerät 1 aus zwei Griffstücke 7, an denen ein Antriebsmotor 8 angebracht ist, durch den ein im Inneren des Handarbeitsgerätes 1 angeordnete Antriebsflansch 9 in Rotation versetzt ist. Die Säge- oder Frässcheibe 10 ist trieblich mit dem Antriebsflansch 9 gekoppelt, so dass die Rotationskraft des Antriebsmotors 8 auf die Säge- oder Frässcheibe 10 übertragen ist.

Aus den Figuren 1 und 2 ist zu entnehmen, dass an die Unterseite des Gehäuses 2 eine oder mehrere Distanzplatten 11 angeklipst werden können, um den Abstand zwischen der Unterseite des Gehäuses 2 und dem Fensterrahmen auszugleichen und an die entsprechenden Einbausituationen anzupassen.

Die Distanzplatten 11 weisen unterschiedliche oder gleich groß bemessene Wandstärken auf. Wenn unterschiedlich dicke Distanzplatten 11 vorhanden sind, sind die Werkstoffe, aus denen die Distanzplatten 11 gefertigt sind, unterschiedlich eingefärbt, so dass der Benutzer anhand der Farbgebung der Distanzplatten 11 ohne weiteres erkennen kann, welche Wandstärke die jeweilige Distanzplatte 11 aufweist.

Um die Distanzplatten 11 an die Unterseite des Gehäuses 2 anzubringen, ist an das Gehäuse 2 eine oder mehrere Aufnahmelaschen 12 aus einem biegesteifen Werkstoff angearbeitet, in die zapfen- oder stegartige Aufnahmekammern 13, die in die Distanzplatte 11 eingearbeitet sind, eingreifen und nach Art einer Hinterschneidung in diesen eingeklipst bzw. arretiert sind. Die Aufnahmelaschen 12 und die Aufnahmekammer 13 sind im montiertem Zustand fluchtend zueinander positioniert und verlaufen entlang der Längsseite 6 des Gehäuses 2, um den Austritt der Säge- oder Frässcheibe 10 nicht zu behindern.

Zur Montage bzw. Demontage der ersten benachbart zu dem Gehäuse 2 angeordneten Distanzplatte 11 werden die Aufnahmekammern 13 in die Aufnahmelaschen 12 eingehängt, und um die derart gebildete Drehachse wird die erste Distanzplatte 11 in Richtung des Gehäuses 2 verschwenkt, so dass ein oder mehrere an der Distanzplatte 11 angebrachten Zapfen 14 in Richtung des Gehäuses 2 gelangen, in dem eine oder mehrere Aufnahmekammern 15 eingearbeitet sind. Sobald die Zapfen 14 und die Aufnahmekammern 15 übereinander liegen, werden die Zapfen 14 nach außen gedrückt, und zwar solange, bis die Aufnahmekammer 15 die Zapfen 14 freigibt, so dass diese aufgrund ihrer elastischen Verformbarkeit in ihre Ausgangsposition zurückschnappen und die Zapfen 14 nach Art einer Hinterschneidung art der jeweiligen Aufnahmekammer 15 verrastet ist.

An der an dem Gehäuse 2 angebrachten Distanzplatte 11 sind ebenfalls Aufnahmelaschen 12 und Aufnahmekammern 15 gegenüberliegend zueinander angebracht, so dass die nächste zweite Distanzplatte 11, die identische konstruktive Ausgestaltungsmerkmale wie die erste Distanzplatte 11 aufweist, in gleicher Verfahrensweise an die erste Distanzplatte 11 befestigt werden kann. Folglich sind eine Vielzahl von Distanzplatten 11 an das Gehäuse 2 bzw. aneinanderliegend angebracht, so dass ein beliebiger Abstand ausgeglichen werden kann.

Vörteilhafterweise sind die geometrischen Abmessungen des Gehäuses 2 und der Distanzplatten 11 fluchtend zueinander ausgestaltet, so dass keine seitlichen Überstände entstehen.

Da solche Handarbeitsgeräte 1 auch eine ausschwenkbare Säge- oder Frässcheibe 10 tragen können, ist es erforderlich, im vorderen Eckbereich des Gehäuses 2 die Arretierungsmöglichkeiten zwischen dem Gehäuse 2 und der ersten Distanzplatte 11 zu entfernen, um die Verschwenkbewegung der Säge- oder Frässcheibe 10 nicht zu behindern. Somit sind die Distanzplatten 11 in Form einer Dreipunktlagerung an dem Gehäuse 2 anzubringen, so dass auch die weitere Arretierung von benachbarten Distanzplatten 11 in Form einer Dreipunktlagerung erfolgt, um zu gewährleisten, dass sämtliche Distanzplatten 11 unmittelbar an die Unterseite des Gehäuses 2, wie vorstehend erläutert, angeklipst werden können.

## Patentansprüche

1. Handarbeitsgerät (1) zum Durchtrennen eines Metallklipses (5) in einem Mauerwerk (4), mit einer Säge-oder Frässcheibe (10), die über einen Antriebsflansch (9) mit einem Antriebsmotor (8) des Handarbeitsgerätes (1) trieblich verbunden ist, mit einem an dem Handarbeitsgerät (1) befestigten Gehäuse (2), in dem die Säge-oder Frässcheibe (10) angeordnet ist, in dessen dem Metallklips (5) zugewandten Stirnseite eine Austrittsöffnung (3) für den Austritt der Säge-oder Frässcheibe (10) vorgesehen ist, durch die die Säge-oder Frässcheibe (10), zumindest teilweise, aus dem Gehäuse (2) ragt, wobei die Unterseite des Gehäuses (2) ganz oder teilweise plan ausgestaltet ist,
wobei an der Unterseite des Gehäuses (2) mindestens eine Distanzplatte (11) mit einer vorgegebenen Wandstärke befestigbar ist, wobei durch die Distanzplatte (11) der Abstand zwischen der Säge-oder Frässcheibe (10) und dem Mauerwerk (4) einstellbar ist,
**dadurch gekennzeichnet,**
**dass** an dem Gehäuse (2) mindestens eine zapfen- oder stegförmige Aufnahmelasche (12) vorgesehen ist, in die eine in die Distanzplatte (11) eingearbeitete Aufnahmekammer (13) nach Art einer Hinterschneidung verrastbar ist und/oder dass an der Distanzplatte (11) mindestens ein biegeelastischer Zapfen (14) angeformt ist, der in eine in das Gehäuse (2) des Handarbeitsgerätes (1) eingeformte Aufnahmekammer (15) nach Art einer Hinterschneidung verrastbar oder verklipsbar gehalten ist.

2. Handarbeitsgerät nach Anspruch 1,
**dadurch gekennzeichnet,**
**dass** die Aufnahmelaschen (12) an dem Gehäuse (2) und die Aufnahmekammern (13) an der Distanzplatte (11) bzw. die Zapfen (14) an der Distanzplatte (11) und den Aufnahmekammern (13) an dem Gehäuse (2) im montiertem Zustand fluchtend zueinander verlaufen.

3. Handarbeitsgerät nach Anspruch 1 oder 2,
**dadurch gekennzeichnet,**
**dass** die Aufnahmelaschen (12) an dem Gehäuse (2) und die Aufnahmekammern (13) an der Distanzplatte (11) bzw. die Zapfen (14) an der Distanzplatte (11) und die Aufnahmekammern (15) an dem Gehäuse (2) an den beiden längsseiten (6) des Handarbeitsgerätes (1) angeordnet sind.

4. Handarbeitsgerät nach einem der vorgenannten Ansprüche,
**dadurch gekennzeichnet,**
**dass** an jeder der Distanzplatte (11) ein oder mehrere Aufnahmelaschen (12) angeformt bzw. angebracht ist bzw. sind, die in Aufnahmekammern (13) einer benachbart anzuordnenden Distanzplatte (11) nach Art einer Hinterschneidung einrastbar sind und dass an der benachbarten zweiten Distanzplatte (11) Zapfen (14) angeformt sind, die jeweils in eine Aufnahmekammer (13), die in der ersten Distanzplatte (11) eingearbeitet ist, verklipsbar ist.

5. Handarbeitsgerät nach Anspruch 4,
**dadurch gekennzeichnet,**
**dass** eine Vielzahl von Distanzplatten (11) stapelbar übereinander angeordnet sind und dass die jeweiligen Distanzplatten (11) identische und/oder unterschiedliche Wandstärken aufweisen.

6. Handarbeitsgerät nach einem der vorgenannten Ansprüche,
**dadurch gekennzeichnet,**
**dass** die Distanzplatten (11) mit unterschiedlichen Wandstärken aus einem farblich andersartigen Werkstoff hergestellt sind.

7. Handarbeitsgerät nach einem der vorgenannten Ansprüche,
**dadurch gekennzeichnet,**
**dass** die Aufnahmelasche (12), die Aufnahmekammern (13,15) und die Zapfen (14) zwischen dem Gehäuse (2) und der ersten Distanzplatte (11) sowie zwischen zwei benachbarten Distanzplatten (11) als Dreipunktlagerung miteinander arretiert sind.

8. Handarbeitsgerät nach einem der vorgenannten Ansprüche,
**dadurch gekennzeichnet,**
**dass** die Abmessungen des Gehäuses (2) und der Distanzplatten (11) fluchtend zueinander ausgestaltet ist.

## Claims

1. Manual operating device (1) for cutting a metal clip (5) in stonework (4), with a sawing or milling disc (10) that is kinematically connected to a drive engine (8) of the manual operating device (1) via a drive flange (9), with a housing (2) which is fixed to the manual operating device (1) and in which the sawing or milling disc (10) is arranged and in the front side of which, facing toward the metal clip (5), an exit opening (3) is provided for the sawing or milling disc (10) to emerge, through which the sawing or milling disc (10) at least partly protrudes from the housing (2), the underside of the housing being implemented entirely or partly planar, wherein at least one spacer plate (11) with a given wall thickness is fixable to the underside of the housing (2), wherein the distance between the sawing or milling disc (10) and the stonework (4) is adjustable via the spacer plate (11),
**characterised in that**
on the housing (2) at least one peg-shaped or web-shaped receiving lug (12) is provided, into which a receiving chamber (13) moulded into the spacer plate (11) is latchable in undercut fashion, and/or that onto the spacer plate (11) at least one elastically flexible pin (14) is moulded, which is held in such a way that it is latchable or clippable, in undercut fashion, into a receiving chamber (15) that is moulded into the housing (2) of the manual operating device (1).

2. Manual operating device according to claim 1,
**characterised in that,**
in an assembled state, the receiving lugs (12) on the housing (2) and the receiving chambers (13) on the spacer plate (11) respectively the pins (14) on the spacer plate (11) and the receiving chambers (13) on the housing (2) extend aligned with respect to each other.

3. Manual operating device according to claim 1 or 2,
**characterised in that**
the receiving lugs (12) on the housing (2) and the receiving chambers (13) on the spacer plate (11) respectively the pins (14) on the spacer plate (11) and the receiving chambers (15) on the housing (2) are arranged on the two longitudinal sides (6) of the manual operating device (1).

4. Manual operating device according to one of the preceding claims,
**characterised in that**
one or several receiving lugs (12) is/are moulded onto respectively arranged on each of the spacer plates (11), which receiving lugs (12) are latchable, in undercut fashion, into receiving chambers (13) of a spacer plate (13) which is to be arranged adjacently, and that pins (14) are moulded onto the neighbouring second spacer plate (11), which is respectively clippable into a receiving chamber (13) that has been moulded into the first spacer plate (11).

5. Manual operating device according to claim 4,
**characterised in that**
a plurality of spacer plates (11) are arranged in such a way that they are stackable one above the other, and that the respective spacer plates (11) have identical and/or different wall thicknesses.

6. Manual operating device according to one of the preceding claims,
**characterised in that**
the spacer plates (11) are made, with different wall thicknesses, of a material that has differences in colour.

7. Manual operating device according to one of the preceding claims,
**characterised in that**
the receiving lug (12), the receiving chambers (13, 15) and the pins (14) are arrested together in three-point support fashion between the housing (2) and the first spacer plate (11) as well as between two neighbouring spacer plates (11).

8. Manual operating device according to one of the preceding claims,
**characterised in that**
the dimensions of the housing (2) and of the spacer plates (11) are implemented aligned with each other.

## Revendications

1. Appareil de travail manuel (1) pour couper un clip métallique (5) dans un murage (4), avec un disque à sciage ou fraisage (10), lequel est raccordé à un moteur d'entraînement (8) de l'appareil de travail manuel (1) via une bride d'entraînement (9) cinématiquement, avec un boîtier (2) raccordé à l'appareil de travail manuel (1), dans lequel le disque à sciage ou fraisage (10) est disposé, dans le côté avant duquel, tourné vers le clip métallique (5), est prévu une aperture sortie (3) pour la sortie du disque à sciage ou fraisage (10) au travers de laquelle le disque à sciage ou fraisage (10) émerge au moins partiellement du boîtier (2), le côté inférieure du boîtier (2) étant implémenté entièrement ou partiellement plan,
au moins une plaque d'écartement (11), ayant un épaissement de paroi défini, étant fixable au côté inférieure du boîtier (2), la distance entre le disque à sciage ou fraisage (10) et le murage (4) étant ajustable par le biais de la plaque d'écartement,
**caractérisé en ce qu'**
au moins une éclisse recevant (12) de forme de tenon ou de traverse est prévue au boîtier (2), dans laquelle une chambre recevant (13) incorporée dans la plaque d'écartement (11) est encliquetable de façon contre-dépouille et/ou qu'au moins un tenon pliable (14) est moulé à la plaque d'écartement (11), lequel est tenu de telle manière qu'il est encliquetable ou clippable dans une chambre recevant (15) moulée dans le boîtier (2) de l'appareil de travail manuel (1) de façon contre-dépouille.

2. Appareil de travail manuel selon la revendication 1,
**caractérisé en ce qu'**
en état monté, les éclisses recevant (12) au boîtier (2) et les chambres recevant (13) à la plaque d'écartement (11), respectivement les tenons (14) à la plaque d'écartement (11) et à les chambres recevant (13) au boîtier (2), s'étendent de façon enlignée l'un par rapport à l'autre.

3. Appareil de travail manuel selon la revendication 1 ou 2,
**caractérisé en ce que**
les éclisses recevant (12) au boîtier (2) et les chambres recevant (13) à la plaque d'écartement (11), respectivement les tenons (14) à la plaque d'écartement (11) et les chambres recevant (15) au boîtier (2), sont disposés aux deux côtés longitudinales (6) de l'appareil de travail manuel (1).

4. Appareil de travail manuel selon l'une quelconque des revendications précédentes,
**caractérisé en ce qu'**
une ou plusieurs éclisses recevant (12) sont moulées, respectivement montées, à chacune plaque d'écartement (11), lesquelles sont encliquetables, de façon contre-dépouille, en chambres recevant (13) d'une plaque d'écartement (11), laquelle est à disposer à côté, et que des tenons (14) sont moulés au deuxième plaque d'écartement (11) voisine, laquelle est respectivement clippable dans une chambre recevant (13) incorporée dans la première plaque d'écartement (11).

5. Appareil de travail manuel selon la revendication 4,
**caractérisé en ce qu'**
une pluralité des plaques d'écartement (11) sont disposées de telle manière qu'ils sont empilables l'une sur l'autre, et que les respectives plaques d'écartement (11) ont des épaisseurs de paroi identiques et/ou différentes.

6. Appareil de travail manuel selon l'une quelconque des revendications précédentes,
**caractérisé en ce que**
les plaques d'écartement (11) sont produites, avec des épaisseurs de paroi différentes, d'un matériau ayant différences en couleur.

7. Appareil de travail manuel selon l'une quelconque des revendications précédentes,
**caractérisé en ce que**
l'éclisse recevant (12), les chambres recevant (13, 15) et les tenons (14) sont arrêtés l'un avec l'autre, entre le boîtier (2) et la première plaque d'écartement (11) ainsi qu'entre deux plaques d'écartement voisines (11), comme logement en trois points.

8. Appareil de travail manuel selon l'une quelconque des revendications précédentes,
**caractérisé en ce que**
les mesurages du boîtier (2) et des plaques d'écartement (11) sont implémentés alignés l'un à l'autre.
